# EUROPÄISCHE PATENTSCHRIFT

(11) **EP 0 543 143 B1**
(45) Veröffentlichungstag und Bekanntmachung des Hinweises auf die Patenterteilung: **17.01.1996**
(21) Anmeldenummer: 92117575.8
(22) Anmeldetag: 15.10.1992
(51) Int. Cl.: A01G 1/08

(54) **Drehbarer Begrenzungsstein**
Rotable stone for the demarcation
Pierre rotative pour la démarcation

(30) Priorität: 16.11.1991 DE 4137814
(43) Veröffentlichungstag der Anmeldung: 26.05.1993
(73) Patentinhaber: Gloistein, Klaus, D-75181 Pforzheim (DE)
(72) Erfinder: Gloistein, Klaus, D-75181 Pforzheim (DE)
(74) Vertreter: Weller, Wolfgang, Dr.rer.nat.

(56) Entgegenhaltungen:
- EP-A- 0 385 950
- DE-A- 2 841 794
- DE-U- 7 431 043
- DE-U- 8 326 942
- DE-U- 8 811 002
- DE-U- 9 001 128
- FR-A- 2 161 427
- GB-A- 504 333
- US-A- 2 888 779
- US-A- 3 373 668
- US-A- 4 982 535

## Beschreibung

Die Erfindung betrifft einen Begrenzungsstein mit einem sich in einer Verlegeebene erstreckenden Bodenteil, dessen erstes Ende, an das ein weiterer Begrenzungsstein anlegbar ist, mit einer kreisförmigen Ausbauchung versehen ist, und dessen gegenüberliegendes zweites Ende, an das ebenfalls ein weiterer Rasenstein anlegbar ist, mit einer kreisförmigen Einbuchtung gleichen Radius wie die Ausbauchung versehen ist, und wobei eine senkrecht zum Bodenteil stehende Erhebung vorgesehen ist, die im Bereich des ersten Endes in einer abgerundeten Kante endet.

Ein derartiger Begrenzungsstein ist aus der US-A-2 888 779 bekannt.

Derartige Begrenzungssteine dienen dazu, eine Bodenfläche, meist eine Rasenfläche, gegenüber einer anderen Fläche, meist einem Gehweg oder einem Beet, abzugrenzen. Durch das Vorsehen der Ausbauchung einerseits und der Einbuchtung andererseits ist es möglich, mehrere Begrenzungssteine formschlüssig längs einer Begrenzungslinie aneinanderzulegen. Durch den formschlüssigen Eingriff der Ausbauchung eines Begrenzungssteines in die Einbuchtung des nächst anliegenden Begrenzungssteines kann ein Zusammenbau quer gerichteten Kräften widerstehen, d.h., die durch die Reihe aneinandergelegter Begrenzungssteine gebildete Begrenzungslinie verschiebt sich in seitlicher Richtung nicht. Das Vorsehen der Rundungen in Form einer Ausbauchung einerseits bzw. einer Einbuchtung andererseits eröffnet die Möglichkeit, derartige Begrenzungssteine längs Kurvenlinien zu verlegen. Es ist oftmals wünschenswert, die Reihe an Begrenzungssteinen so auszubilden, daS sich zugleich eine vom Boden etwa vertikal erhebende Trennwand ergibt, die verhindern soll, daß Ausschwemmungen von Erdreich über die Begrenzungslinie stattfinden. Dazu ist bei der eingangs erwähnten US-A-2 888 779 längs einer seitlichen Längskante eine sich senkrecht zum Bodenteil stehende Erhebung vorgesehen, die im Bereich des ersten Endes in einer abgerundeten Kante endet.

Steinelemente, die einerseits eine Ausbauchung und andererseits eine Einbuchtung aufweisen, sind aus der US-A-4 982 535, der US-A-3 373 668, dem DE-U-90 01 128 sowie dem DE-U-83 26 942 bekannt.

Aus dem DE-U-88 11 002 sowie dem DE-U-74 31 043 sind Begrenzungssteine bekannt, die zusätzlich zu einem sich in der Verlegeebene erstreckenden Bodenteil eine etwa senkrecht zu diesem stehende Erhebung aufweisen, die sich über die gesamte Länge des Bodenteils erstreckt und jeweils auf Höhe des Bodenteils endet. Die mittige Erhebung kann beispielsweise als Führungskante für das Rad eines Rasenmähers dienen, wobei das Rad auf der Oberseite des Bodenteils neben der Erhebung läuft.

Aus der DE-A-28 41 794, der GB-A-504 333 und der EP-A-0 385 950 sind vertikal stehende, plattenförmige Bauelemente bekannt, die an einer Endkante einen sich nur etwa über die Hälfte der Höhe erstreckenden Vorsprung aufweisen, auf oder unter den ein entsprechender komplementärer Vorsprung eines anderen Elementes gebracht werden kann. Durch Zusammensetzen zweier benachbarter Elemente liegt der Vorsprung eines Elementes auf dem entsprechenden Vorsprung des anderen Elementes. Sind in den Vorsprüngen Öffnungen vorgesehen, die bei übereinandergelegten Vorsprüngen fluchten, können durch diese Befestigungsstangen eingeführt werden. Sind die Vorsprünge mit einer kreisförmigen Kontur versehen, ist am entsprechenden anliegenden Stein eine kreisförmige Einbuchtung gleichen Durchmessers vorgesehen, so daß solche Steine auch in abgewinkelter Form aneinandergelegt werden können.

Damit bei aneinandergelegten Rasensteinen mit vertikaler Wand entsprechend dem DE-U-88 11 002 in Verlegerichtung keine Lücken zwischen den Wänden auftreten, enden die Wände in vertikalen Schnittebenen fluchtend mit den Enden des Bodenteils. Damit auch mit solchen Rasenbegrenzungssteinen mit vertikaler Erhebung eine gekrümmte Begrenzungslinie geschaffen werden kann, wird vorgeschlagen, dem Bodenteil des Begrenzungssteines in Draufsicht eine trapezförmige Kontur zu geben. Durch alternierendes Anlegen der Begrenzungssteine kann eine geradlinige Begrenzungslinie geschaffen werden, durch gleichsinniges Aneinanderreihen kann jedoch eine gekrümmte Linie geschaffen werden, wobei der Krümmungsradius abhängig von der Länge des Bodenteils und dem Trapezwinkel ist. Sollen mit derartigen Begrenzungssteinen jedoch beliebige Krümmungsradien gelegt werden können, ist eine Vielzahl an verschiedenen Ausgestaltungen an Begrenzungssteinen notwendig, d.h. Steine mit verschiedenen Längen und Steine mit verschiedenen Trapezwinkeln.

Aufgabe der vorliegenden Erfindung ist, einen Begrenzungsstein der eingangs genannten Art derart weiterzuentwickeln, daß mit einer einzigen Art an Begrenzungssteinen sowohl geradlinige als auch verschiedenartig gekrümmte, stabile durchgehende Begrenzungslinien geschaffen werden können, die zugleich einen seitlich zur Begrenzungslinie gerichteten Bodenmaterialübergang bzw. Überwuchs hindern und auch eine Führungskante für einen Rasenmäher bereitstellen.

Erfindungsgemäß wird die Aufgabe dadurch gelöst, daß die Kante der senkrecht zum Bodenteil stehenden Erhebung kreisförmig abgerundet ist und der Umfangkreismittelpunkt mit dem Kreismittelpunkt des Umfangkreises der durchmessergrößeren Ausbauchung des Bodenteils zusammenfällt, und daß sich die Erhebung am zweiten Ende, vom ersten in Richtung zweites Ende gesehen, über der Einbuchtung in diese fort erstreckt und in einer Kante endet, die eine vertikale Mantellinie aufweist, die um das Maß des Radius des Umfangskreises der abgerundeten Kante am ersten Ende vom Kreismittelpunkt der Einbuchtung zurückversetzt ist.

Durch die Maßnahme, daß einerseits die Erhebung am ersten Ende in einer kreisförmig abgerundeten Kante endet, deren Umfangskreismittelpunkt mit dem Kreismittelpunkt des Umfangskreises der Ausbauchung des Bodenteils zusammenfällt und daß andererseits die Erhebung am zweiten Ende eine Mantellinie aufweist, die genau um das Maß gegenüber dem Umfangskreismittelpunkt der Einbuchtung zurückversetzt ist, das dem Radius der kreisförmig abgerundeten Kante am ersten Ende entspricht, ist sichergestellt, daß bei zwei aneinandergelegten Begrenzungssteinen in jeder Drehstellung die Mantellinie am zweiten Ende der Erhebung des einen Steines an der kreisförmigen Kante am ersten Ende des anderen Steines anliegt, somit keine Lücken zwischen den Erhebungen aneinanderliegender Wände auftreten können. Die Mantellinie "umläuft" quasi die Außenseite der kreisförmigen Kante am vorderen Ende bei der Relativdrehbewegung zweier aneinanderliegender Steine zueinander. Der Anlagepunkt der Erhebung am zweiten Ende eines Steines an der kreisförmig abgerundeten Kante am ersten Ende eines benachbarten Steines liegt, im Horizontalschnitt gesehen, in jeder Drehstellung auf einer Radiallinie ausgehend vom Mittelpunkt des Umfangskreises der kreisförmig abgerundeten Kante, so daß in jeder Drehstellung der Steine relativ zueinander, die Erhebung eines gedrehten, sich gegenüber der benachbarten Erhebung eines ruhenden Steines entsprechend einem dem Winkelverschiebemaß wandernden Radius der Ausbauchung bzw. der abgerundeten Kante des ruhenden Steines bewegt hat. Daraus ergibt sich bei einer Reihe an aneinandergelegten Begrenzungssteinen ein symmetrisches Erscheinungsbild der Begrenzungssteine, ohne daß der Eindruck entsteht, daß die Wand des verdreht angelegten Steines aus der optischen Mittellinie seitlich versetzt ist. Die, in vertikaler Richtung gesehen, über der Einbuchtung vorspringende Erhebung hat nun zusätzlich den erheblichen Vorteil, daß bei aneinandergelegten Begrenzungssteinen unter dieser Erhebung ein Teil der Ausbauchung des nächsten Begrenzungssteines liegt und dieser durch den überstehenden Teil der Erhebung vor Abheben aus der Verlegeebene gehindert wird. Somit "hält" der überstehende Teil der Erhebung das Bodenteil des nächsten anliegenden Rasenbegrenzungssteines in der Verlegeebene, so daß zusätzliche hakenartige Vorsprünge oder Elemente nicht mehr vorgesehen sein müssen, die sicherstellen, daß die Bodenteile niveaugleich liegen bleiben. Somit wird neben der freien Verdrehbarkeit in einem bestimmten Winkelbereich unter Aufrechterhaltung des Widerstands gegen seitlich gerichtete Kräfte ohne weiteres Bauteil zugleich auch ein Widerstehen gegen Verschieben durch vertikal gerichtete Kräfte geschaffen. Daraus ergibt sich dann auch eine durchgehend ebene, stufenlose Bodenfläche, die ein hoppelfreies Führen eines Rasenmäherrades längs der Steinreihe ermöglicht.

Somit wird die Aufgabe vollkommen gelöst.

In einer weiteren Ausgestaltung der Erfindung ist die Ausbauchung am ersten Ende als Halbkreisabschnitt ausgebildet, und das Bodenteil ist, ab Kreismittelpunkt der Ausbauchung Richtung zweites Ende gesehen, beidseits jeweils derart ausgeschnitten, daß der Halbkreisabschnitt jeweils um das halbe Winkelmaß α/2 der maximal gewünschten Verdrehbarkeit zweier aneinandergelegter Begrenzungssteine weitergeführt ist, und daß die äußeren Endbereiche des Bodenteils im Bereich der Einbuchtung entsprechend beschnitten sind.

Diese Maßnahmen haben den Vorteil, daß durch das Vorsehen der Hinterschneidung der an die Ausbauchung anschließende Abschnitt des Bodenteils eine Breite von zumindest dem Durchmesser des Halbkreisabschnittes oder größer aufweisen kann, so daß auch bei relativ kleinem Durchmesser der Ausbauchung ein zumindest ebenso breites Bodenteil möglich ist. Durch die zugleiche Hinterschneidung und entsprechende Beschneidung der Enden im Bereich der Einbuchtung braucht der Halbkreisabschnitt jeweils nur um die halbe maximale Verschwenkungsbreite weitergeführt werden. Soll beispielsweise die maximale Verdrehbarkeit eines Rasensteines aus einer geradlinigen Aneinanderreihung heraus von beidseits jeweils 60° bestehen, so ist es ausreichend, den Halbkreisabschnitt jeweils um einen Winkelabschnitt von 30° weiterzuführen. Dementsprechend ist dann der Einschnitt relativ gering, d.h. der zwischen der Ausbauchung am ersten Ende und den daran anschließenden verbleibenden Abschnitt des Bodenteils entstehende halsartige Einschnitt beeinträchtigt die Stabilität des Begrenzungssteines nur unwesentlich. Die Endflanken der Einschnitte in Drehrichtung bilden außerdem Anschläge für die entsprechend beschnittenen Endbereiche im Bereich der Einbuchtung und lassen beispielsweise bei dem gewünschten maximalen Verdrehwinkel von 60° dann aus sechs aneinandergelegten Begrenzungssteinen eine regelmäßig sechseckförmige Umgrenzung bilden, beispielsweise, um einen Baum von einer umgebenden Rasenfläche abzugrenzen. Es müssen dann die Steine nur in die maximal verdrehbare Endposition verdreht und aneinandergereiht werden, ohne daß größere Aufmerksamkeit bezüglich der tatsächlichen Winkelstellung aufgebracht werden müssen.

In einer weiteren Ausgestaltung der Erfindung weist das Bodenteil die Breite des Durchmessers des Umfangskreises der Ausbauchung auf, und beidseits führt eine Schnittlinie von den Endpunkten der über den Halbkreisausschnitt weitergeführten Umfangslinie der Ausbauchung zu einer Seitenkante jeweils längs der Radien, die den Kreissektor 180° + α begrenzen, und die Enden des Bodenteils im Bereich der Einbuchtung sind beidseits jeweils längs Radialschneidelinien beschnitten, die sich, von einem Durchmesser der Einbuchtung senkrecht zur Verbindungslinie der Kreismittelpunkte von Ausbauchung und Einbuchtung, um α/2 Richtung erstes Ende erheben.

Diese Maßnahme hat den Vorteil, daß, wie bereits zuvor erwähnt, ein relativ geschlossen konturierter Körper des Bodenteils entsteht, der seitlich lediglich die Einschnitte aufgrund der Weiterführung des Halbkreisaufschnittes aufweist, außerdem sind keine spitz zulaufenden Endkanten im Bereich der Einbuchtung vorhanden, die bei der Handhabung, der Lagerung oder dem Transport der Rasensteine abbrechen könnten. Durch diese kompakte Ausbildung ist es möglich, daß auch relativ kleine Steine ausreichend stabil sind, um auf die Erhebung wirkende Kräfte, sei es durch Bodenverschiebungen oder sei es bei der Verwendung als Führungsschiene für einen Rasenmäher, annehmen zu können.

In einer weiteren Ausgestaltung der Erfindung ist die Ausbauchung als Halbkreisabschnitt ausgebildet, der ab Kreismittelpunkt der Ausbauchung in Richtung zweites Ende gesehen, um das halbe Winkelmaß der maximal gewünschten Verdrehbarkeit zweier aneinandergelegter Begrenzungssteine weitergeführt ist, und daß der daran anschließende Abschnitt des Bodenteils eine Breite aufweist, die einer Sehne entspricht, die die endseitige Punkte des Kreisbogens verbindet, der dem über den Kreisabschnitt weitergeführten Kreissegment entspricht.

Diese Maßnahme hat den Vorteil, daß die Einschnitte in dem Zwischenbereich zwischen Ausbauchung und verbleibendem Abschnitt des Bodenteils entfallen können, da die Breite dieses Abschnitts lediglich der Breite der Sehne entspricht, die die endseitigen Punkte des Kreisbogens verbindet. Daraus resultiert ein Bodenteil, das einen relativ schlanken Körper aufweist, an den sich ein erweiterter Kopf in Form der Ausbauchung anschließt, um den die Einbuchtung am zweiten Ende eines anderen Steines einfach geführt werden kann.

In einer weiteren Ausgestaltung der Erfindung ist der Begrenzungsstein zweiteilig ausgebildet, und zwar zum einen als Scheibe, deren Radius dem Radius der Ausbauchung entspricht, wobei die Scheibe konzentrisch einen im Querschnitt kreisförmigen Pfosten aufweist, dessen Radius dem des Umfangskreises der abgerundeten Kante der Erhebung am ersten Ende entspricht, und zum zweiten als an die Scheibe anlegbares Element, das spiegelsymmetrisch an gegenüberliegenden Enden jeweils mit der Einbuchtung samt forterstreckender Erhebung versehen ist.

Diese Maßnahme hat den Vorteil, daß trotz der zweiteiligen Ausbildung die Handhabung, die Herstellung und auch die Verlegung sehr einfach zu bewerkstelligen ist. Die Scheibe mit dem abstehenden mittigen Zapfen ist fertigungstechnisch sehr einfach herstellbar und kann bei der Handhabung sehr einfach am Zapfen ergriffen werden. Das spiegelsymmetrisch ausgebildete Element ist fertigungstechnisch ebenfalls sehr einfach herstellbar und kann ebenfalls deswegen leicht gehandhabt werden, da ja an beiden Seiten die Erhebung über die Einbuchtung hinaussteht, so daß beispielsweise sehr schwere Begrenzungssteine an diesen beiden überstehenden Seiten ergriffen werden können. Durch die zweiteilige Ausbildung sind dann die beiden Einzelkomponenten bei sehr schwerer Ausbildung relativ gesehen leicht und erleichtern die Handhabung bei der Verlegung. Die beiden aneinandergelegten Teile weisen eine Kontur auf, die der Kontur eines zuvor beschriebenen einstückigen Begrenzungssteines entspricht.

In einer weiteren Ausgestaltung der Erfindung endet die Kante, in der die Erhebung am zweiten Ende endet, in einer abgerundeten ausgebauchten Kante, deren äußerste Scheitelmantellinie die Mantellinie darstellt.

Diese Maßnahme hat den Vorteil, daß die hintere abgerundete Kante, die bei aneinandergefügten Rasensteinen lediglich über die Mantellinie mit der abgerundeten Kante der Erhebung des benachbarten Steines in Berührung steht, fertigungstechnisch einfach und äußerst exakt ausgebildet werden kann, so daß sichergestellt ist, daß trotz der linienförmigen Berührung eine durchgehende Wand ohne Spalt geschaffen wird. Die Erhebung ragt ja an dem zweiten Ende über das darunterliegende Bodenteil hinaus und ist somit Beschädigungen besonders ausgesetzt bzw. stellt für die Personen, die den Rasenstein handhaben, eine Verletzungsgefahr dar. Die abgerundete Ausbildung mindert nun eine solche Verletzungsgefahr und ist aufgrund der Geometrie gegen äußere mechanische Belastungen äußerst widerstandsfähig, trägt somit zu einer Ausbildung einer stabilen Begrenzung bei.

In einer weiteren Ausgestaltung der Erfindung ist die abgerundete ausgebauchte Kante kreisförmig, wobei der Durchmesser der Wandstärke der Erhebung entspricht.

Diese Maßnahme hat den Vorteil, daß eine fertigungstechnisch sehr einfach herstellbare und stabile Endkante der Erhebung geschaffen wird, die in der kreisförmigen Rundung endet.

In einer weiteren Ausgestaltung der Erfindung ist die Kante, in der die Erhebung am zweiten Ende endet, als eine kreisförmige Einbuchtung ausgebildet, deren Radius gleich dem Radius der abgerundeten Kante am ersten Ende ist, und deren Umfangskreismittelpunkt mit dem Kreismittelpunkt der Einbuchtung des Bodenteils zusammenfällt.

Diese Maßnahme hat den Vorteil, daß bei aneinandergelegten Rasensteinen die eingebuchtete Kante der Erhebung am zweiten Ende eines Rasensteines die abgerundete Kante der Erhebung am ersten Ende eines benachbarten Rasensteins über einen gewissen Winkelbereich umgreift, wodurch ein großflächiger inniger Formschluß auch zwischen den gegenüberstehenden oder aneinanderliegenden Kanten der Erhebungen geschaffen ist. Dadurch, daß der Kreismittelpunkt der Umfangslinie des Kreises der Einbuchtung an der Erhebung eines Steines mit dem Kreismittelpunkt der abgerundeten ausgebauchten Kante am ersten Ende eines anderen Steines zusammenfällt, können zwei aneinandergelegte Begrenzungssteine sicher geführt zueinander verdreht werden, wobei die Einbuchtung im Bodenteil sowie die Einbuchtung an der Kante der Erhebung des einen Steines um die Ausbauchung des Bodenteils sowie die abgerundete Kante der Erhebung am vorderen Ende des anderen, anliegenden Steines gleiten.

Die Erfindung wird nachfolgend an Hand einiger ausgewählter Ausführungsbeispiele in Zusammenhang mit den beiliegenden Zeichnungen näher beschrieben und erläutert. Es zeigen:
- Fig. 1: eine Draufsicht eines ersten Ausführungsbeispiels eines erfindungsgemäßen Begrenzungssteines,
- Fig. 2: einen Schnitt längs der Linie II-II in Fig. 1,
- Fig. 3: eine Draufsicht zwei aneinandergelegter Begrenzungssteine entsprechend dem in Fig. 1 dargestellten Ausführungsbeispiel, wobei diese relativ zu einer geradlinigen Verlegweise gegeneinander verdreht sind,
- Fig. 4: einen Schnitt längs der Linie IV-IV von Fig. 1,
- Fig. 5: eine Draufsicht in Explosionsdarstellung eines weiteren Ausführungsbeispiels eines erfindungsgemäßen zweiteiligen Rasensteines,
- Fig. 6: einen Schnitt längs der Linie VI-VI in Figur 5 in zusammengefügtem Zustand der beiden Einzelteile,
- Fig. 7: ein drittes Ausführungsbeispiel eines erfindungsgemäßen Begrenzungssteines, wobei zwei solche Steine um 90° verdreht zueinander aneinandergelegt darstellt sind, und
- Fig. 8: eine der Darstellung von Fig. 7 entsprechende Darstellung eines vierten Ausführungsbeispiels eines erfindungsgemäßen Begrenzungssteines.

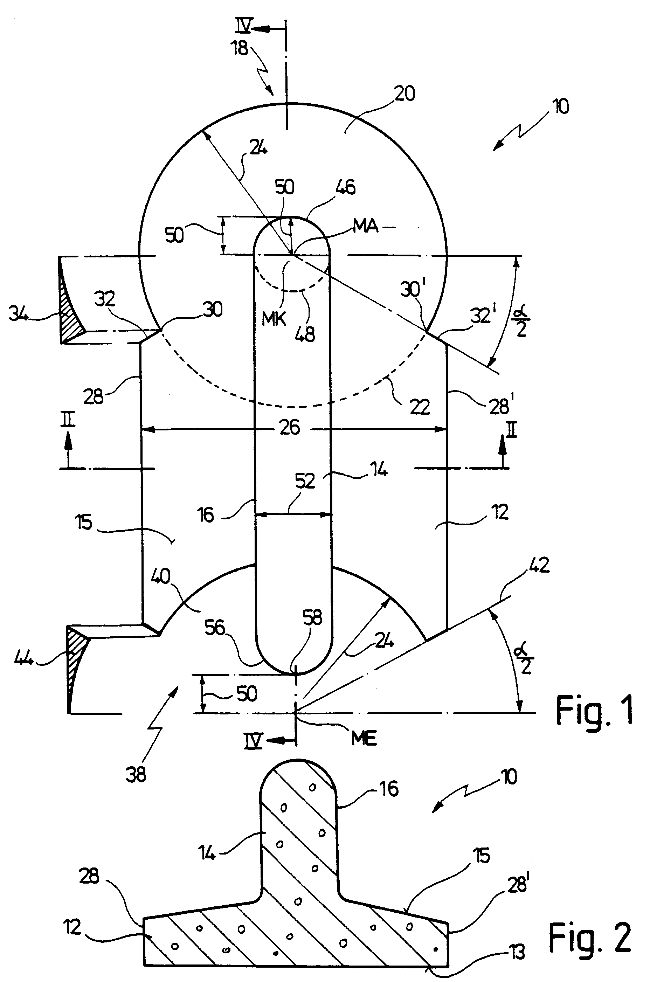

Ein in den Figuren 1, 2 und 3 dargestellter Begrenzungsstein 10 weist ein Bodenteil 12 auf, dessen Unterseite 13 eben ausgebildet ist und die zur Auflage auf einer hier nicht näher dargestellten Verlegeebene dient, auf der der Begrenzungsstein ausgelegt werden soll.

Das Bodenteil 12 ist mittig mit einer vertikalen Erhebung 14 versehen, die sich von einer Oberseite 15 des Bodenteils 12 erhebt.

Wie insbesondere aus Figur 2 zu entnehmen, ist der Bereich der Oberseite 15 beidseits der Erhebung 14 leicht geneigt, wobei dies dazu vorgesehen ist, um Regenwasser seitlich vom Bodenteil 12 abzuführen.

Die Erhebung 14 ist als eine durchgehende Wand 16 ausgebildet, die einstückig mit dem Bodenteil 12 ist und beispielsweise aus Beton, Leichtbeton, Kunststoff oder dergleichen hergestellt ist.

An einem ersten Ende 18 ist das Bodenteil 12 mit einer kreisförmigen Ausbauchung 20 versehen, deren Umfangskreis 22 einen Radius 24 aufweist.

Das Bodenteil 12 weist eine Breite 26 auf, die dem Zweifachen des Radius 24 des Umfangskreises 22 entspricht.

Das Bodenteil 12 weist ferner zwei längs verlaufende, sich beidseits parallel zur mittigen Wand 16 erstreckende Längskanten 28, 28' auf.

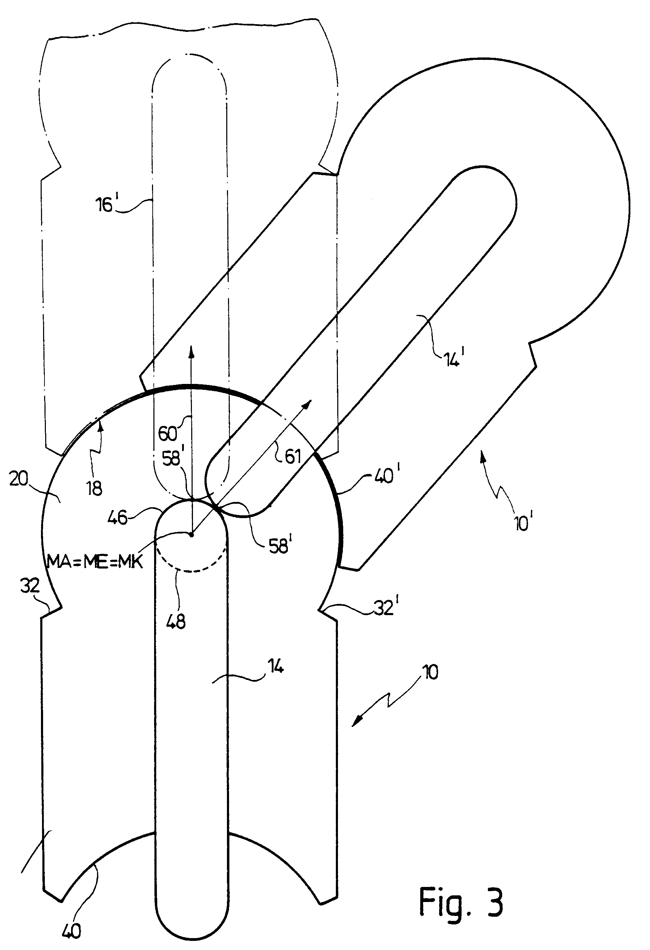

Die Ausbauchung 20, die von einem Mittelpunkt MA des Umfangskreises 22 der Ausbauchung in Richtung erstes Ende 18 gesehen halbkreisförmig ist, ist in entgegengesetzter Richtung gesehen jeweils um einen Winkelbereich α/2 fortgesetzt und endet in Endpunkten 30, 30'. Der Winkel α entspricht einem maximalen Verdrehwinkel zweier aneinandergelegter Begrenzungssteine 10, wie dies nachfolgend noch an Hand von Figur 3 näher erläutert wird. Der Winkel α beträgt im dargestellten Ausführungsbeispiel 60°, somit ist der Umfangskreis 22 beidseits jeweils um den Winkel α/2 = 30° weitergeführt.

Von den Endpunkten 30, 30' führen Schneidelinien 32 bzw. 32' zu den seitlichen Längskanten 28 bzw. 28'. Die Schneidelinien 32 bzw. 32' verlaufen längs Radiallinien ausgehend vom Mittelpunkt MA des Umfangskreises 22 der Ausbauchung 20. Daraus resultieren etwa grob dreieckförmig ausgeschnittene oder hinterschnittene Bereiche, wobei in Fig. 1 auf der linken Seite ein solches ausgeschnittenes Stück 34 schraffiert dargestellt ist.

An einem zweiten Ende 38, das dem ersten Ende 18 gegenüberliegt, ist das Bodenteil 12 mit einer Einbuchtung 40 versehen, die ebenfalls kreisförmig ist, wobei deren Krümmungsradius 24 identisch wie der Radius 24 des Umfangskreises 22 der Ausbauchung 20 am ersten Ende 18 ist. Ausgehend von einem Mittelpunkt ME des hier nicht näher dargestellten Umfangskreises der Einbuchtung 40 sind die hinteren spitzen Endbereiche des Bodenteils 12 längs Schneidelinien 42 beschnitten.

Die Schneidelinien 42 sind dabei so gelegt, daß sie sich von einem Durchmesser des Umfangkreises der Einbuchtung 40, der senkrecht zu den Längskanten 28 bzw. 28' verläuft, um den Winkel α/2 in Richtung erstes Ende 18 erheben. Dadurch wird an den spitz auslaufenden Enden des Bodenteils 12 ein Stück 44 ausgeschnitten, wie dies in Fig. 1 auf der linken Seite dargestellt ist. Das ausgeschnittene Stück 44 ist spiegelbildlich jedoch identisch zu dem ausgeschnittenen Stück 34, das der Hinterschneidung an der Ausbauchung 20 entspricht.

Die Wand 16 endet an ihrem dem ersten Ende 18 zuwandten Ende in einer abgerundeten kreisförmigen Kante 46, wobei ein Mittelpunkt MK des Umfangskreises 48 dieser abgerundeten Kante 46 mit dem Mittelpunkt MA des Umfangskreises 22 der Ausbauchung 20 zusammenfällt.

Der Durchmesser (2 x Radius 50) des Umfangskreises 48 entspricht dabei der Breite 52 der Wand 16.

Die Wand 16 reicht an dem dem zweiten Ende 38 des Bodenteils 12 zugewandten Ende über die Einbuchtung 40 hinaus und endet, im in Figur 1 dargestellten Ausführungsbeispiel ebenfalls in einer abgerundeten Kante 56, deren Radius dem Radius 50 der abgerundeten Kante 46 am gegenüberliegenden Ende entspricht. Eine äußere Scheitelmantellinie 58 stellt ein äußerstes Ende der Wand 16 im Bereich des zweiten Endes 38 dar.

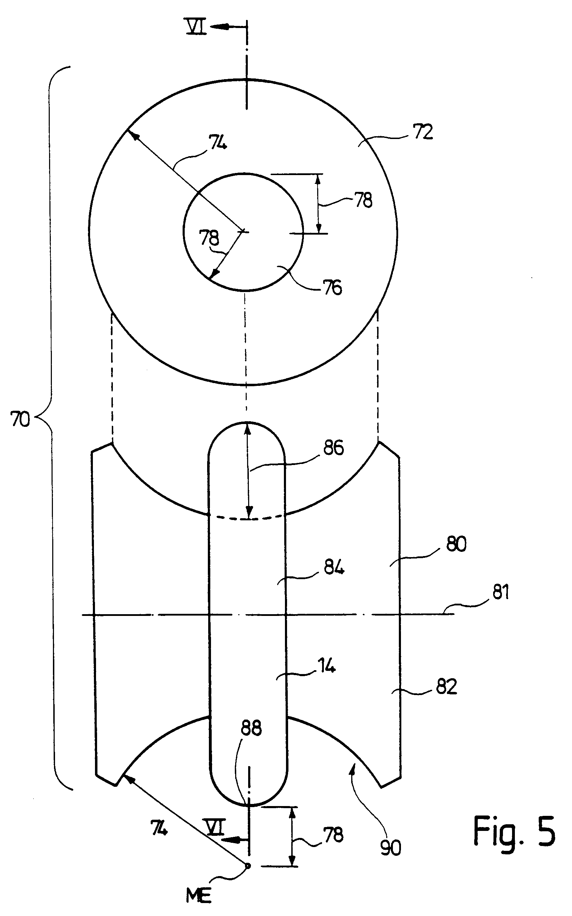

Wie insbesondere aus Fig. 4 zu entnehmen, ragt die Wand 16 oberhalb der Einbuchtung 40 über das Bodenteil 12 hinaus, so daß, in der Darstellung von Fig. 1, unter das untere überstehende Ende der Wand 16 eine Ausbauchung 20 eines weiteren Begrenzungssteins geschoben werden kann, wie das nachfolgend in Zusammenhang mit Fig. 3 näher erläutert wird.

Die Lage der Scheitelmantellinie 58 der Kante 56 ist so gewählt, daß diese zum einen auf einer Verbindungslinie zwischen dem Mittelpunkt ME der Einbuchtung 40 und dem Mittelpunkt MK der Ausbauchung 20 liegt und außerdem gegenüber dem Mittelpunkt ME der Einbuchtung 40, in Richtung erstes Ende 18 gesehen, exakt um das Maß des Radius 50 des Umfangskreises 48 der Kante 46 der Wand 16 am an dem ersten Ende 18 zugewandten Ende zurückversetzt ist.

Aufgrund dieser Bemaßung ist es dann möglich, wie dies in Fig. 3 dargestellt ist, daß an einen ersten Begrenzungsstein 10 ein weiterer Begrenzungsstein 10' angelegt werden kann, wobei dieser in Fig. 3 in strichpunktierter Darstellung in geradliniger Ausrichtung dargestellt ist. Die Scheitelmantellinie 58' des in der Darstellung von Fig. 3 oberen, geradlinig angelegten, weiteren Begrenzungssteines 10' kommt dann an einer vertikal stehenden Mantellinie des zylindrischen Umfangmantels der Kante 46 des Begrenzungssteines 10 zum Liegen. Gleichzeitig kommt die Ausbauchung 20 des Begrenzungssteines 10, unterhalb des überstehenden Teiles der Wand 16' in der Einbuchtung 40' des Rasenbegrenzungssteines 10' bündig zum Liegen.

Die Wände 16, 16' der aneinandergelegten Begrenzungssteine 10, 10' liegen dabei in linearer Ausrichtung, wie dies durch einen Pfeil 60 ausgehend vom Mittelpunkt des Umfangskreises der Ausbauchung 20 gesehen angedeutet ist. Aus der in Fig. 3 mit strichpunktierter Darstellung gezeichneten Stellung in die mit ausgezogenen Linien dargestellten Stellung kann der Begrenzungsstein 10' einfach dadurch gebracht werden, daß er um das erste Ende 18 des Begrenzungssteines 10 gedreht wird.

Dabei läuft die äußerste endseitige Mantellinie 58' der Wand 14' um die mantelförmige Außenfläche der Rundung 46 der Wand 14, d.h. in jeglicher Drehstellung berühren sich die beiden Wände 14, 14' über die Scheitelmantellinie 58, so daß kein Spalt zwischen diesen auftreten kann.

Wie in Fig. 3 durch den Pfeil 61 dargestellt, verläuft eine gedachte Mittellängslinie der Wand 14' nach wie vor durch den Mittelpunkt MA des Umfangskreises 22 der Ausbauchung 20, der ja zugleich auch Mittelpunkt ME des Umfangskreises der Einbuchtung 40' am Begrenzungsstein 10' ist und zugleich Mittelpunkt Mk des Umfangskreises 48 der abgerundeten Kante 46 des Begrenzungssteines 10. Da, wie zuvor im Zusammenhang mit Fig. 1 erwähnt, die Mantellinie 58' des Rasenbegrenzungssteines 10' um genau das Maß 50 des Radius dieses Umfangskreises 48 im Hinblick auf den Kreismittelpunkt ME der Einbuchtung 40 zurückversetzt ist, ist die zuvor beschriebene Wanderung der Scheitelmantellinie 58' möglich, ohne daß eine Spaltbildung auftrifft und ohne daß sich die aneinanderliegenden Bereiche von Ausbauchung 20 und Einbuchtung 40 entfernen, was der Fall wäre, falls die Wand 14 bzw. die Wand 14' jeweils auf Höhe der Kreismittelpunkte MA, ME und MK enden würden. Es wäre zwar dann noch eine bündige Anlage in Längsrichtung möglich, bei einem Verdrehen würden sich jedoch die Bodenteile 12, 12' der Rasensteine 10, 10' voneinander wegbewegen.

Aus Fig. 3 ist zu entnehmen, daß der Begrenzungsstein 10' noch nicht um seinen maximalen Verschwenkbereich verdreht ist, sondern daß dieser erst dann erreicht ist, falls der beschnittene Endbereich des Begrenzungssteines 10' auf die Schneidekante 32' des Begrenzungssteines 10 trifft.

Aus der Darstellung von Fig. 3 ist zu entnehmen, daß der Begrenzungsstein 10, dadurch daß er mit seiner Ausbauchung 20 unter die Erhebung 14' des Begrenzungssteines 10' geschoben wird, von diesem niedergehalten wird.

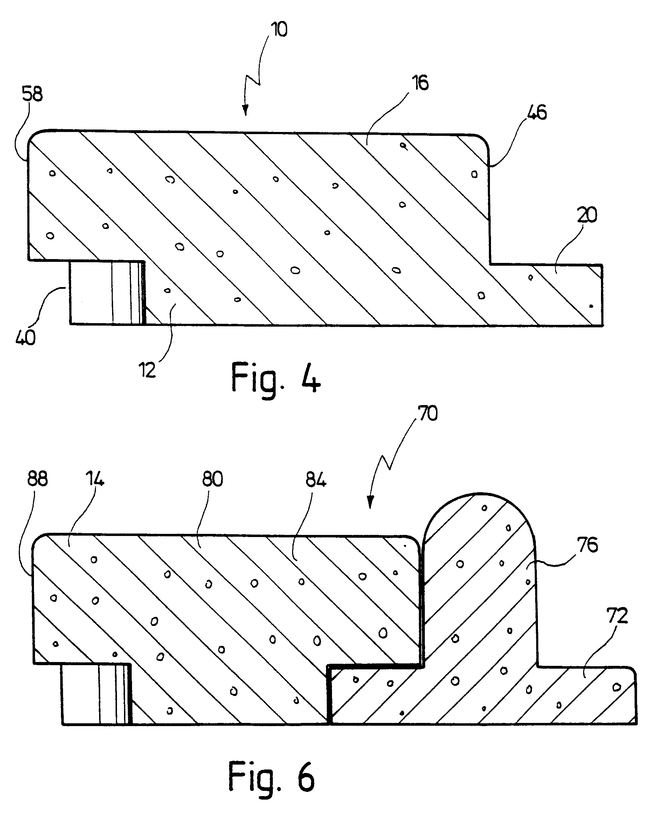

Ein in Fig. 5 und 6 dargestelltes weiteres Ausführungsbeispiel eines erfindungsgemäßen Begrenzungssteines 70 ist aus zwei Teilen aufgebaut, nämlich aus einer Scheibe 72 mit einem Radius 74, die mittig einen vertikal abstehenden Pfosten 76 trägt. Der Radius 78 des Pfosten 76 ist dabei geringer als der Radius 74 der Scheibe 72. Ferner ist ein an die Scheibe 72 anlegbares Element 80 vorgesehen, das längs einer Ebene 81 spiegelbildlich ausgebildet ist.

Es ist daher ausreichend, eine Hälfte des Elements 80 auf einer Seite der Ebene 81 zu beschreiben.

Das Element 80 weist ein Bodenteil 82 auf, dessen Höhe der Höhe der Scheibe 72 entspricht.

Das Bodenteil 82 des Elements 80 ist mit zwei hier nicht näher bezeichneten, gegenüberliegenden, längs verlaufenden Längskanten versehen, deren Länge und Ausgestaltung identisch zu den Längskanten 28, 28' des in Fig. 1 dargestellten Ausführungsbeispiels ist.

Das Bodenteil 82 ist mittig mit einer vertikal abstehenden Erhebung 84 versehen, die, in der Darstellung von Fig. 5, unterhalb der Ebene 81, um dasselbe Maß über eine Einbuchtung 90 hervorragt, wie das zuvor in Zusammenhang mit Fig. 1 beschrieben wurde. Demzufolge endet die Erhebung 84 in einer äußeren Scheitelmantellinie 88, die um exakt das Maß des Radius 78 des Pfostens 76 der Scheibe 72 gegenüber einem Mittelpunkt ME des Umfangkreises der Einbuchtung 90 zurückversetzt ist, wobei der Radius 74 des Umfangskreises der Einbuchtung 90 identisch zum Radius 74 der Scheibe 72 ist.

Stellt man sich die in Fig. 5 dargestellten beiden Teile, nämlich Scheibe 72 und Element 80 aneinandergefügt vor, d.h. also, daß die Scheibe 72 in eine der beiden identischen Ausbuchtungen 90 eingeschoben ist, so entsteht ein Körper, der nahezu identisch mit dem in Fig. 1 dargestellten Körper ist.

D.h. die Wand setzt sich dann zusammen aus der Erhebung 84 und dem Pfosten 76. Da in dem in Fig. 5 dargestellten Ausführungsbeispiel der Radius 78 des Pfostens 76 größer gewählt ist als der Umfangskreis der abgerundeten Enden der Erhebung 84, ist, wie zuvor erwähnt, die Scheitelmantellinie 88 um das Maß dieses Radius 78 gegenüber dem Mittelpunkt ME der Einbuchtung 90 zurückversetzt. Das bedeutet andererseits auch, daß die Erhebung 84 über die Umfangslinie der Einbuchtung 90, wie dies in Fig. 5 an der oberen Hälfte des Elements 80 angedeutet ist, um ein Maß bzw. Strecke 86 übersteht, die der Differenz der Radien 74 und 78 von Scheibe 72 bzw. Pfosten 76 entspricht.

Es ist daher nicht notwendig, daß die Erhebung, sei es in einstückiger Ausbildung wie von Fig. 1 oder in zweistückiger Ausbildung wie in Fig. 5, an beiden Enden denselben Krümmungsradius aufweist, sondern es muß eben immer nur die Bedingung erfüllt sein, daß die Scheitelmantellinie 58 bzw. 88 um das Maß des Radius 50 bzw. 78 gegenüber dem Umfangskreismittelpunkt ME der Einbuchtung 40 bzw.90 zurückversetzt ist, wobei dieses Maß in Fig. 5 dem Radialmaß 78 des Pfostens 76 entspricht.

Wie aus Fig. 5 sofort ersichtlich, kann das Element 80 in jeder Kreiswinkelstellung an die Scheibe 72 herangelegt werden und dadurch zunächst zu einem Begrenzungsstein 70 zusammengesetzt werden. Bei der weiteren Verlegung wird dann an die Scheibe 72 ein weiteres Element 80 angelegt, das je nach Verlegeweise genau gegenüberliegend zum Element 80 angelegt wird, falls eine geradlinige Verlegungsweise gewünscht wird oder in entsprechend verdrehter Stellung. Das Element 80 ist im Endbereich der Einbuchtungen 90 so beschnitten, wie das zuvor in Zusammenhang mit Fig. 1 beschrieben wurde, so daß eine maximale Verdrehstellung zweier an die Scheibe 72 angelegter Elemente 80 dadurch begrenzt ist, daß die abgeschnittenen Kanten aneinanderstoßen.

Aus Fig. 5 ist auch einleuchtend, daß sogar drei Elemente 80 an die Scheibe 72 angelegt werden können, so daß ausgehend von der Scheibe 72 sternförmig Begrenzungslinien aus Begrenzungssteinen 70 hergestellt werden können.

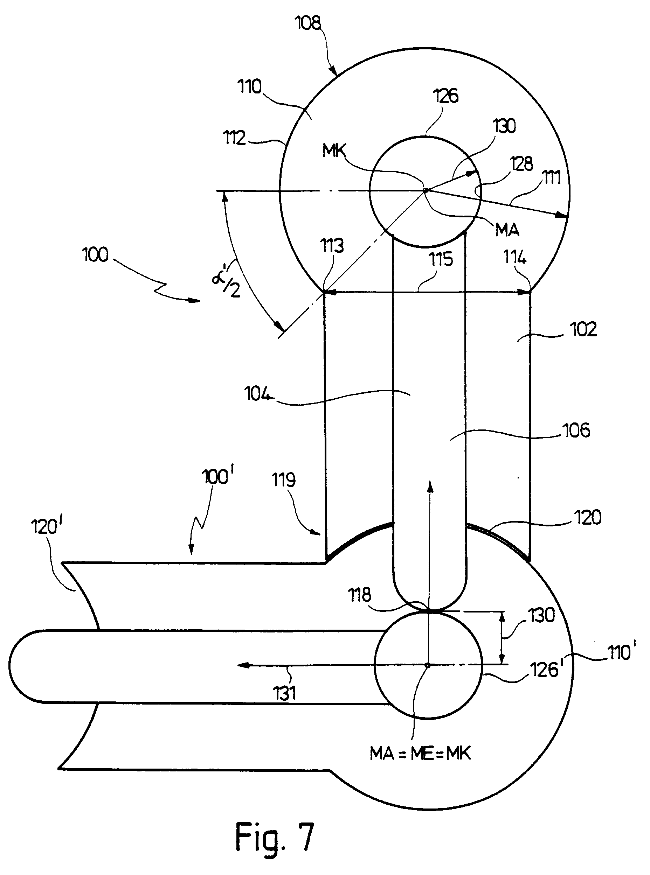

Bei einem weiteren, in Fig. 7 dargestellten Ausführungsbeispiel eines erfindungsgemäßen Begrenzungssteines 100 ist dieser, wie bereits zuvor beschrieben mit einem Bodenteil 102 versehen, von dem sich mittig eine Erhebung 104 in Form einer vertikalen Wand 106 erhebt.

An einem ersten Ende 108 des Bodenteils 102 ist eine Ausbauchung 110 vorgesehen, die eine kreisförmige Kontur aufweist. Ein Umfangskreis 112 der Ausbauchung 110 weist einen Radius 111 auf.

Wie zuvor in Zusammenhang mit Fig. 1 beschrieben, ist die Ausbauchung 110 von einem Mittelpunkt MA in Richtung eines zweiten Endes 119 gesehen, jeweils um einen halben maximalen Verschwenkwinkel α' fortgesetzt, wobei der Winkel α' im Fig. 7 dargestellten Ausführungsbeispiel 90° beträgt. Eine zwischen den Endpunkten 113, 114 des weitergeführten Umfangskreises 112 gelegene Sehne 115 entspricht der Breite eines sich an die Ausbauchung 110 anschließenden Abschnittes 116 des Bodenteils 102.

Der Abschnitt 116 endet in einer kreisförmigen Einbuchtung 120, deren Krümmungsradius dem Krümmungsradius 111 des Umfangskreises 112 der Ausbauchung 110 entspricht.

Die Wand 106 steht, wie zuvor bereits in Zusammenhang mit den Ausführungsbeispielen von Fig. 1 und 5 beschrieben, oberhalb der Einbuchtung 120 über diese hinaus und endet in einer äußeren Scheitelmantellinie 118. Die Scheitelmantellinie 118 stellt eine Mantellinie eines endseitigen Hüllzylinders der abgerundeten Wand 104 dar, dessen Durchmesser der Breite der Wand 106 entspricht, wie das bereits in Zusammenhang mit Fig. 1 beschrieben wurde.

Am gegenuberliegenden Ende, also im Bereich der Ausbauchung 110, endet die Wand 106 in einer abgerundeten Kante 126, deren Umfangskreis 128 einen Radius 130 aufweist, der größer ist als der hier nicht näher bezeichnete Radius des Umfangskreises der Rundung am überstehenden Ende.

Der Mittelpunkt MK des Umfangskreises 128 fällt dabei wieder mit dem Mittelpunkt MA der Ausbauchung 110 zusammen.

Auch hier ist wieder die Bedingung gegeben, daß die Scheitelmantellinie 118 gegenüber dem Mittelpunkt ME der Einbuchtung 120 exakt um das Maß des Radius 130 des Umfangskreises 128 der Kante 126 zurückgesetzt ist.

Wird nun, wie in Fig. 7 dargestellt ist, in die Einbuchtung 120 des Begrenzungssteines 100 die Ausbauchung 110' eines weiteren Begrenzungssteines 100' eingelegt, so kommt die Scheitelmantellinie 118 an der zylindrischen Außenseite der Kante 126' zum Liegen und wandert beim Verdrehen des Begrenzungssteines 100' aus der 90° abgewinkelten Position, die eine maximale Verdrehposition darstellt, in die längs ausgerichtete Position entlang der Außenseite der Kante 126'.

Auch bei dem in Fig. 7 dargestellten Ausführungsbeispiel verlaufen gedachte Mittellängslinien der Wände 106 aneinanderliegender Begrenzungssteine 100, 100' durch die Mittelpunkte MA, ME und MK der Umfangskreise von Ausbauchung 110', Einbuchtung 120 und Kante 126', wie dies in Fig. 7 durch Pfeile 131 angedeutet ist. Auch hier ist wieder gewährleistet, daß zwischen den Wänden aneinanderliegender Begrenzungssteine 100, 100' in keiner der möglichen Drehstellungen Spalte entstehen.

In den in Zusammenhang mit Figur 1 - 7 dargestellten Ausführungsbeispielen war die am zweiten Ende über die Einbuchtung hinausstehende Endkante der jeweiligen Wand als Rundung dargestellt. Diese Ausgestaltung ist nicht zwingend, sondern die Kante kann auch als Spitze oder als geradlinige Kante verlaufen, wobei lediglich Bedingung ist, daß eine Scheitelmantellinie 58 bzw. 88 oder 118 vorhanden ist, die soweit gegenüber dem Mittelpunkt der Einbuchtung zurückgesetzt ist, wie am gegenüberliegenden Ende die entsprechende Kante über den Mittelpunkt der Ausbauchung hinaussteht.

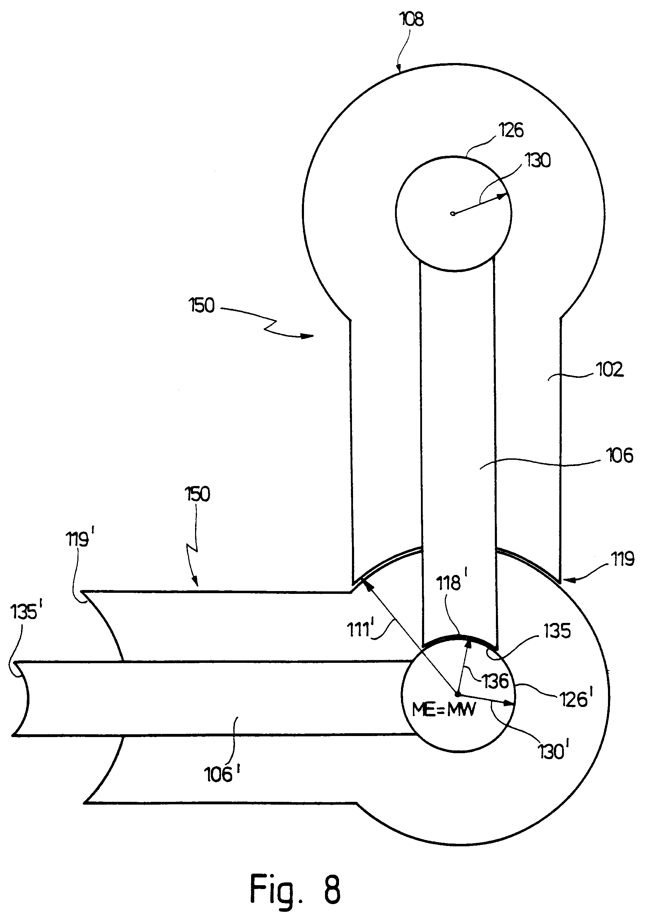

Aus dem in Fig. 8 dargestellten weiteren Ausführungsbeispiel ist jedoch auch zu entnehmen, daß die Endkante der über die Einbuchtung überstehenden Wand auch anders ausgestaltet sein kann.

In dem in Fig. 8 dargestellten Ausführungsbeispiel eines Begrenzungssteines 150 sind für gleiche Bauteile wie bei dem in Fig. 7 dargestellten Ausführungsbeispiel gleiche Bezugsziffern verwendet. Die Ausführung in Fig. 8 unterscheidet sich gegenüber der Ausfünrung von Fig. 7 ja auch lediglich in der Ausgestaltung der Kante des überstehenden Endes der Wand 106.

Dieses Ende ist im Gegensatz zu dem in Fig. 7 dargestellten Ausführungsbeispiel mit einer Einbuchtung 135 versehen, deren Umfangskreis einen Radius 136 aufweist, der identisch zu dem Radius 130 des Umfangskreises der vorderen Kante 126 des Begrenzungssteines 150 ist.

Auch am Ende der Wand 106 des Begrenzungssteines 150 ist eine Scheitelmantellinie 118 vorhanden, über die diese Wand an der Kante 126' des angelegten Begrenzungssteines 150' anliegt. Die Scheitelmantellinie 118 ist dabei nicht wie in Fig. 7 dargestellten Ausführungsbeispiel die äußerste entfernteste Scheitellinie einer kreisförmigen Wölbung, sondern eine Talsohlenlinie der Einbuchtung 135. Durch die Einbuchtung 135 ist ein flächiges Anliegen des Endes der Wand 106 an der Kante 126' des benachbarten Begrenzungssteines 150' gegeben.

In den zuvor beschriebenen Ausführungsbeispielen war die Erhebung zwischen den Endkanten als glatte Wand mit gleichbleibender Wandstärke dargestellt. Es ist selbstverständlich, daß die Wand beliebig konturiert sein kann, sofern die Endkanten die Bedingungen bezüglich der Beabstandung von den Kreismittelpunkten von Ausbauchung bzw. Einbuchtung erfüllen.

## Patentansprüche

1. Begrenzungsstein mit einem sich in einer Verlegeebene erstreckenden Bodenteil (12, 82, 102), dessen erstes Ende (18, 108), an das ein weiterer Begrenzungsstein anlegbar ist, mit einer kreisförmigen Ausbauchung (20, 110) versehen ist, und dessen gegenüberliegendes zweites Ende (38, 119), an das ebenfalls ein weiterer Rasenstein anlegbar ist, mit einer kreisförmigen Einbuchtung (40, 90, 120) gleichen Radius (24, 74) wie die Ausbauchung (20, 110) versehen ist, und wobei eine senkrecht zum Bodenteil (12, 82, 102) stehende Erhebung (14, 84, 104) vorgesehen ist, die im Bereich des ersten Endes (18, 108) in einer abgerundeten Kante (46, 126) endet, dadurch gekennzeichnet, daß die Kante kreisförmig abgerundet ist und ihr Umfangskreismittelpunkt (MK) mit dem Kreismittelpunkt (MA) des Umfangskreises (22, 112) der durchmessergrößeren Ausbauchung (20, 110) des Bodenteils (12, 82, 102) zusammenfällt, und daß sich die Erhebung (14, 84, 104) am zweiten Ende (38, 119), vom ersten (18, 108) in Richtung zweites Ende (38, 119) gesehen, über der Einbuchtung (40, 90, 110) in diese fort erstreckt und in einer Kante (56) endet, die eine Mantellinie (58, 88, 118, 118') aufweist, die um das Maß des Radius (50, 78, 130) des Umfangskreises (48, 78) der abgerundeten Kante (46, 126) am ersten Ende (18, 108) vom Kreismittelpunkt (ME) der Einbuchtung (40, 90, 120) zurückversetzt ist.

2. Begrenzungsstein nach Anspruch 1, dadurch gekennzeichnet, daß die Ausbauchung (20, 110) als Halbkreisabschnitt ausgebildet ist, und daß das Bodenteil (12, 82, 102), ab Kreismittelpunkt (MA) der Ausbauchung (20, 110) in Richtung zweites Ende (38, 119) gesehen, beidseitig jeweils derart ausgeschnitten ist, daß der Halbkreisabschnitt jeweils um das halbe Winkelmaß α/2 der maximal gewünschten Verdrehbarkeit zweier aneinandergelegter Rasensteine (10, 10'; 100, 100') weitergeführt ist, und daß die äußeren Endbereiche des Bodenteils (12, 82) im Bereich der Einbuchtung (40, 90) entsprechend beschnitten sind.

3. Rasenbegrenzungsstein nach Anspruch 2, dadurch gekennzeichnet, daß das Bodenteil (12, 82) die Breite (26) des Durchmessers des Umfangkreises (22) der Ausbauchung (20) aufweist, und daß beidseits eine Schnittlinie von den Endpunkten (30, 30') der über den Halbkreisabschnitt weitergeführten Umfangslinie der Ausbauchung (20) zu einer Seitenkante (28, 28') jeweils längs der Radien führt, die den Kreissektor 180° + α begrenzen, und daß die Enden des Bodenteils (12) im Bereich der Einbuchtung (40) beidseits jeweils längs Radialschneidelinien (42) beschnitten sind, die sich von einem Durchmesser der Einbuchtung (40), senkrecht zur Verbindungslinie der Kreismittelpunkte (MA, ME) von Ausbauchung (20) und Einbuchtung (40), um α/2 Richtung erstes Ende (38) erheben.

4. Begrenzungsstein nach Anspruch 1, dadurch gekennzeichnet, daß die Ausbauchung (110) als Halbkreisabschnitt ausgebildet ist, der ab Kreismittelpunkt (MA) der Ausbauchung (110) in Richtung zweites Ende (119) gesehen, um das halbe Winkelmaß α/2 der maximal gewünschten Verdrehbarkeit zweier aneinandergelegter Begrenzungssteine (100, 100') weitergeführt ist, und daß der daran anschließende Abschnitt (116) des Bodenteils (102) eine Breite aufweist, die einer Sehne (115) entspricht, die die endseitigen Punkte (113, 114) des Kreisbogens verbindet, der dem über den Halbkreisabschnitt weitergeführten Kreissegment entspricht.

5. Begrenzungsstein nach einem der Ansprüche 1 - 4, dadurch gekennzeichnet, daS der Körper zweiteilig ausgebildet ist, und zwar zum einen als Scheibe (72), deren Radius (74) dem Radius der Ausbauchung entspricht, wobei die Scheibe (72) konzentrisch einen im Querschnitt kreisförmigen Pfosten (76) aufweist, dessen Radius (78) dem des Umfangskreises der abgerundeten Kante der Erhebung am ersten Ende entspricht, und zum zweiten als an die Scheibe (72) anlegbares Element (80) ausgebildet ist, das spiegelsymmetrisch an gegenüberliegenden Enden jeweils mit der Einbuchtung (120) samt darüber hinaus erstreckender Erhebung (84) versehen ist.

6. Begrenzungsstein nach einem der Ansprüche 1 - 5, dadurch gekennzeichnet, daß die Kante, an der die Erhebung (14) am zweiten Ende (38) endet, eine abgerundete ausgebauchte Kante (56) ist, deren äußerste Scheitelmantellinie die Mantellinie (58) darstellt.

7. Begrenzungsstein nach Anspruch 6, dadurch gekennzeichnet, daß die abgerundete Kante (56) kreisförmig ist, wobei der Durchmesser deren Umfangkreises der Wandstärke der Erhebung (14) entspricht.

8. Begrenzungsstein nach einem der Ansprüche 1 - 5, dadurch gekennzeichnet, daß die Kante, in der die Erhebung (106) am zweiten Ende endet, eine kreisförmige Einbuchtung (135, 135') aufweist, deren Krümmungsradius (136) gleich dem Radius (130) der abgerundeten Kante (126) am ersten Ende (108) ist, und deren Umfangskreismittelpunkt (MW) mit dem Kreismittelpunkt (ME) der Einbuchtung (119) des Bodenteils (102) zusammenfällt.

## Claims

1. Boundary stone having a base part (12, 82, 102) extending in the plane of laying, of which the first end (18, 108), against which another boundary stone can be placed, is provided with a circular bulge (20, 110), and of which the second, opposite end (38, 119), against which another lawn stone can likewise be placed, is provided with a circular indentation (40, 90, 120) having the same radius (24, 74) as the bulge (20, 110), and wherein an elevation (14, 84, 104) standing perpendicularly to the base part (12, 82, 102) is provided which terminates, in the region of the first end (18, 108), in a rounded edge (46, 126), characterized in that the edge is circularly rounded and the centre (MK) of its peripheral circle coincides with the centre (MA) of the peripheral circle (22, 112) of the bulge (20, 110) of greater diameter on the base part (12, 82, 102) and that, at the second end (38, 119), the elevation (14, 84, 104), viewed from the first end (18, 108) in the direction of the second end (38, 119), extends onwards above the indentation (40, 90, 110) and into the latter and terminates in an edge (56) having a surface line (58, 88, 118, 118') which is offset backwards, by the dimension of the radius (50, 78, 130) of the peripheral circle (48, 78) of the rounded edge (46, 126) at the first end (18, 108), from the centre (ME) of the circle of the indentation (40, 90, 120).

2. Boundary stone according to claim 1, characterized in that the bulge (20, 110) is constructed as a semicircular section and that the base part (12, 82, 102) is cut away on each of the two sides, viewed from the centre (MA) of the circle of the bulge (20, 110) in the direction of the second end (38, 119), in such a way that the semicircular section is extended, in each case, by half the angular dimension α/2 of the maximum desired torsibility of two lawn stones (10, 10'; 100, 100') placed against one another, and that the outer end regions of the base part (12, 82) are trimmed in a corresponding manner in the region of the indentation (40, 90).

3. Lawn boundary stone according to claim 2, characterized in that the base part (12, 82) has the same width (26) as the diameter of the peripheral circle (22) of the bulge (20) and, on both sides, an intersecting line leads from the end points (30, 30') of the peripheral line of the bulge (20), which peripheral line is extended over the semicircular section, to a lateral edge (28, 28') in each case along the radii which delimit the circular sector 180° + α, and that the ends of the base part (12) are trimmed, in the region of the indentation (40), on each of the two sides along radial intersecting lines (42) which rise, from a diameter of the indentation (40), perpendicularly to the line connecting the centres (MA, ME) of the circles of the bulge (20) and indentation (40), by α/2 in the direction of the first end (38).

4. Boundary stone according to claim 1, characterized in that the bulge (110) is constructed as a semicircular section which is extended, viewed from the centre (MA) of the circle of the bulge (110) in the direction of the second end (119), by half the angular dimension α/2 of the maximum desired torsibility of two boundary stones (100, 100') placed against one another, and that the section (116) of base part (102) adjacent thereto has a width which corresponds to a chord (115) connecting the terminal points (113, 114) of the circular arc which corresponds to the circular segment extended over the semicircular section.

5. Boundary stone according to one of claims 1 to 4, characterized in that the body is constructed in two parts, namely on the one hand as a disc (72), the radius (74) of which corresponds to the radius of the bulge, the said disc (72) having, concentrically, a post (76) of circular cross-section, the radius (78) of which corresponds to that of the peripheral circle of the rounded edge of the elevation at the first end, and on the other as an element (80) which can be placed against the disc (72) and is provided, in a specularly symmetrical manner at opposite ends in each case, with the indentation (120) together with the elevation (84) extending beyond it.

6. Boundary stone according to one of claims 1 to 5, characterized in that the edge at which the elevation (14) terminates at the second end (38), is a rounded, bulged edge (56), the outermost peak surface line of which represents the surface line (58).

7. Boundary stone according to claim 6, characterized in that the rounded edge (56) is circular, the diameter of its peripheral circle corresponding to the wall thickness of the elevation (14).

8. Boundary stone according to one of claims 1 to 5, characterized in that the edge in which the elevation (106) terminates at the second end has a circular indentation (135, 135'), the radius of curvature (136) of which is equal to the radius (130) of the rounded edge (126) at the first end (108), and the centre (MW) of the peripheral circle of which coincides with the centre (ME) of the circle of the indentation (119) in the base part (102).

## Revendications

1. Borne de limitation avec une partie de sol (12, 82, 102) s'étendant dans un plan de pose, dont la première extrémité (18, 108), à laquelle peut être apposée une autre borne de limitation, est munie d'une partie convexe (20, 110) circulaire et dont la deuxième extrémité (38, 119) opposée, à laquelle peut être également apposée une autre borne de gazon, est munie d'une partie concave (40, 90, 120) circulaire de même rayon (24, 74) que la partie convexe (20, 110), et où est prévue une éminence (14, 84, 104), dressée perpendiculairement à la partie de sol (12, 82, 102), qui se termine, dans la zone de la première extrémité (18, 108), par une arête arrondie (46, 126), caractérisée en ce que l'arête est arrondie de façon circulaire et en ce que son centre de cercle périphérique (MK) coïncide avec le centre de cercle (MA) du cercle périphérique (22, 112) de la partie convexe (20, 110), de plus grand diamètre, de la partie de sol (12, 82, 102) et en ce que l'éminence (14, 84, 104), au niveau de la deuxième extrémité (38, 119), vue depuis la première extrémité (18, 108) vers la deuxième extrémité (38, 119), s'étend au-dessus de la partie concave (40, 90, 110) dans cette dernière et se termine par une arête (56) qui présente une génératrice (58, 88, 118, 118') qui, par rapport au centre de cercle (ME) de la partie concave (40, 90, 120), présente un retrait qui correspond à la dimension du rayon (50, 78, 130) du cercle périphérique (48, 78) de l'arête (46, 126) arrondie au niveau de la première extrémité (18, 108).

2. Borne de limitation selon la revendication 1, caractérisée en ce que la partie convexe (20, 110) est réalisée sous la forme d'un segment semi-circulaire et en ce que la partie de sol (12, 82, 102), vue depuis le centre de cercle (MA) de la partie convexe (20, 110) vers la deuxième extrémité (38, 119), est respectivement découpée sur les deux côtés de telle façon que le segment semi-circulaire est prolongé respectivement de la demi-dimension d'angle α/2 de l'aptitude à la rotation maximale souhaitée de deux bornes de gazon (10, 10'; 100, 100') juxtaposées et en ce que les zones extrêmes externes de la partie de sol (12, 82) sont découpées en conséquence dans la zone de la partie concave (40, 90).

3. Borne de limitation selon la revendication 2, caractérisée en ce que la partie de sol (12, 82) présente la largeur (26) du diamètre du cercle périphérique (22) de la partie convexe (20) et en ce que, des deux côtés, une sécante conduit depuis les points extrêmes (30, 30') de la ligne périphérique, prolongée sur le segment semi-circulaire, de la partie convexe (20) vers une arête latérale (28, 28') respectivement le long des rayons qui limitent le secteur de cercle 180° + α, et en ce que les extrémités de la partie de sol (12), dans la zone de la partie concave (40), sont, des deux côtés, respectivement coupées le long de sécantes radiales (42) qui s'élèvent, d'une dimension α/2 dans la direction de la première extrémité (38), depuis un diamètre de la partie concave (40), perpendiculairement à la ligne de liaison des centres de cercle (MA, ME) de la partie convexe (20) et de la partie concave (40).

4. Borne de limitation selon la revendication 1, caractérisée en ce que la partie convexe (110) est réalisée sous la forme d'un segment semi-circulaire qui, vu depuis le centre de cercle (MA) de la partie convexe (110) en direction de la deuxième extrémité (119), est prolongé de la demi-valeur d'angle α/2 de l'aptitude à la rotation maximale souhaitée de deux bornes de limitation (100, 100') juxtaposées et en ce que le tronçon (116) de partie de sol (102) qui s'y raccorde présente une largeur qui correspond à une corde (115) qui relie les points (113, 114), côté extrémité, de l'arc de cercle qui correspond au segment de cercle prolongé sur le segment de demi-cercle.

5. Borne de limitation selon l'une des revendications 1 à 4, caractérisée en ce que le corps est réalisé en deux parties, à savoir, d'une part, sous la forme d'un disque (72) dont le rayon (74) correspond au rayon de la partie convexe, le disque (72) présentant de façon concentrique un montant (76) de section circulaire dont le rayon (78) correspond au rayon du cercle périphérique de l'arête arrondie de l'éminence au niveau de la première extrémité, et, d'autre part, sous la forme d'un élément (80), pouvant être apposé au disque (72), qui est muni, avec une symétrie plan et au niveau des extrémités opposées, respectivement de la partie concave (120) ainsi que de l'éminence (84) qui s'étend au-delà.

6. Borne de limitation selon l'une des revendications 1 à 5, caractérisée en ce que l'arête, sur laquelle se termine l'éminence (14) au niveau de la deuxième extrémité (38), est une arête (56) convexe arrondie dont la génératrice de crête la plus extérieure représente la génératrice (58).

7. Borne de limitation selon la revendication 6, caractérisée en ce que l'arête arrondie (56) est circulaire, le diamètre de son cercle périphérique correspondant à l'épaisseur de paroi de l'éminence (14).

8. Borne de limitation selon l'une des revendications 1 à 5, caractérisée en ce que l'arête, par laquelle se termine l'éminence (106) au niveau de la deuxième extrémité, présente une partie concave (135, 135') circulaire dont le rayon de courbure (136) est identique au rayon (130) de l'arête (126) arrondie au niveau de la première extrémité (108), et dont le centre de cercle périphérique (MW) coïncide avec le centre de cercle (ME) de la partie concave (119) de la partie de sol (102).
